**Europäisches Patentamt**

**European Patent Office**

**Office européen des brevets**

(19)

(11) Veröffentlichungsnummer: **0 209 800**
**A2**

(12) # EUROPÄISCHE PATENTANMELDUNG

(21) Anmeldenummer: **86109434.0**

(22) Anmeldetag: **10.07.86**

(51) Int. Cl.⁴: **C 09 C 1/50**

---

(30) Priorität: **16.07.85 CH 3083/85**

(43) Veröffentlichungstag der Anmeldung:
**28.01.87 Patentblatt 87/5**

(84) Benannte Vertragsstaaten:
**AT BE CH DE FR GB IT LI LU NL SE**

(71) Anmelder: **BERA ANSTALT**
**Aeulenstrasse 38**
**FL-9490 Vaduz(LI)**

(72) Erfinder: **Ertel, H.J.**
**Route des Crosets**
**CH-1873 Val-d'Illiez(CH)**

(72) Erfinder: **Affolter, J, Dr.**
**Pont-Levis 13**
**CH-1163 Saint-Prex(CH)**

(74) Vertreter: **Rottmann, Richard**
**Rottmann Patentanwälte AG Dufourstrasse 101**
**CH-8034 Zürich(CH)**

---

(54) **Verfahren zur Herstellung von aschearmem und elektrisch leitendem Russ.**

(57) Zur Herstellung von aschearmem und elektrisch leitendem Russ nach dem stützflamm- und quenchfreien Verfahren werden die Kohlenwasserstoffe unter Druck entmischungsfrei auf mindestens 120°C und das Sauerstoffgas auf 150°C und mehr über der Temperatur des Brennstoffes aufgewärmt. Bei der Reaktion wird eine mittlere Verweilzeit von wenigstens 10 Sekunden eingehalten. Der im Reaktor gebildete Russ wird anschliessend in Stufen auf die Filtriertemperatur abgekühlt.

Die Vorrichtung zur Ausführung des Verfahrens enthält mindestens einen Wärmetauscher zur indirekten Abkühlung des Russproduktes.

FIG.1

Verfahren zur Herstellung von aschearmem und elektrisch
leitendem Russ

────────────────────────────────────────────

Die vorliegende Erfindung bezieht sich auf ein Verfahren
zur Herstellung von aschearmem und elektrisch leitendem
Russ durch Teilverbrennung und Pyrolyse von flüssigem Brennstoff mit einem sauerstoffhaltigen Gas in einem Reaktor.
Ferner betrifft die Erfindung eine Vorrichtung zur Ausführung des Verfahrens.

Russ besteht im wesentlichen aus elementarem Kohlenstoff,
welcher hexagonal angeordnet in Ebenen vorliegt, welche geringere gegenseitige Haftung zeigen als beim Graphit. Weitere
Bestandteile in minimalen Konzentrationen sind Sauerstoff,
Wasserstoff, sowie Reststrukturen der Ausgangs-Kohlenwasserstoffe. Die Russe werden technisch vor allem nach ihren Einsatzgebieten geordnet.

Es ist bereits ein Verfahren zur Herstellung von Russ bekannt, bei welchem in einem Verbrennungsreaktor eine Gas-
Luft-Flamme von hoher Temperatur erzeugt wird, in welche
dann flüssige Kohlenwasserstoffe eingespritzt werden. Der
sich in der dabei ablaufendenden endothermen Spaltungsreaktion bildende Russ wird am Ende der Reaktionsstrecke
mit Wasser abgeschreckt und dann gewonnen. Die Ausbeute
liegt üblicherweise bei ca. 50 % des eingesetzten Oel-Kohlenstoffes.

Besondere Schwierigkeiten und aufwendige Verfahren bietet
die Herstellung von Russ, welcher elektrisch leitende Eigenschaften aufweist. Dazu wird eine graphitähnliche Struktur erstrebt, welche nur durch eine wesentliche Qualitätsverbesserung erreicht werden kann. Es soll insbesondere ein
Verfahren vorgeschlagen werden, bei welchem ohne ständige
Stützflamme gearbeitet wird und bei welchem auch kein
Abschrecken der heissen Reaktionsprodukte mit Wasser erfolgt, mittels welchem sonst die chemische Reaktion zum
Stillstand gebracht wird.

Erfindungsgemäss wurde jetzt gefunden, dass die Russqualität durch die Verweilzeit im Reaktor entscheidend beeinflusst wird. Eine weitere Qualitätsverbesserung wird durch
die stufenweise Kühlung erreicht, welche im Gegensatz zum
plötzlichen Abschrecken (Quenchen) steht.

Das erfindungsgemässe Verfahren zur Herstellung von aschearmem und elektrisch leitendem Russ durch Teilverbrennung
und Pyrolyse von flüssigem Brennstoff mit einem sauerstoffhaltigen Gas in einem Reaktor besteht gemäss der Erfindung
darin, dass der flüssige Kohlenwasserstoff vorgewärmt und
unter Druck und das sauerstoffhaltige Gas mit einer höheren
Temperatur als der Kohlenwasserstoff gemeinsam in den Reaktor geleitet werden, während die Zuleitung einer der Reaktion vorangehenden Gas-Luftzuführung in den Reaktor örtlich
getrennt von der Eintrittsstelle der Reaktionskomponenten
erfolgt, und auch darin, dass die Teilverbrennung und Pyrolyse
bei einer Verweilzeit stattfindet, welche mindestens etwa
10 Sekunden beträgt, worauf die Reaktionsprodukte ausserhalb des Reaktors indirekt und stufenweise gekühlt werden.
Dabei ist es zweckmässig, dass zwischen der Temperatur des
Kohlenwasserstoffes und des sauerstoffhaltigen Gases eine
Differenz von wenigstens 150$^{\circ}$C herrscht. Die durchgeführten
Versuche haben ferner gezeigt, dass es besonders vorteilhaft ist, wenn zur Einführung in den Reaktor die Kohlenstoffe auf etwa 120$^O$C bei mindestens 15 bar Druck und das Sauerstoffgas auf etwa 300$^O$C erwärmt werden.

Anstelle des plötzlichen Abschreckens durch in den Reaktionsraum eingespritzten Wassers werden erfindungsgemäss die am Ausgang der Reaktion etwa auf 800 bis 1200$^O$C warmen Reaktionsprodukte in mindestens zwei Stufen durch Wärmeaustausch auf eine Filtriertemperatur von 150 bis 300$^O$C abgekühlt.

In dieser Weise wird ein hochwertiges elektrisch leitendes Produkt mit minimalem Aschegehalt erzeugt, welches in der Industrie mannigfaltig verwendet werden kann. Der so gewonnene Russ kann insbesondere als Verstärkungsmittel und Abrasionsschutz in Kautschuk und Kunststoffen, als Pigment und/oder als elektrostatisch leitender Zusatz in Kunststoffen sowie in Batterien Verwendung finden.

Zur Ausführung des vorgeschlagenen Verfahrens eignet sich eine Vorrichtung, welche einen Reaktor aufweist, der ein Längen/Durchmesserverhältnis von mindestens 2 hat. Diesem Reaktor sind Mittel zur Erwärmung der Kohlenwasserstoffe unter Druck und zur Erhitzung des sauerstoffhaltigen Gases vorgeschaltet. Ferner ist mindestens ein Wärmeaustauscher zur stufenweise indirekten Kühlung der Reaktionsprodukte dem Reaktor nachgeschaltet.

Durch das vorgeschlagene Durchmesserverhältnis wird eine verlängerte, besonders günstige Verweilzeit erreicht, während die übrigen Massnahmen die vorangehend erwähnten Vorteile und Besonderheiten des Verfahrens sichern.

Eine besonders vorteilhafte Ausführung der Vorrichtung sieht vor, dass der Verbrennungsreaktor mit zonenweise verteilten Kühlrohren versehen ist, die in der Auskleidung angeordnet und zur Aufnahme eines im Gegenstrom zirkulierenden Kühlmediums eingerichtet sind. Ferner wird dem Reaktor ein gasbeheizter Wärmeaustauscher zur Erhitzung des sauerstoffhaltigen Gases vorgeschaltet.

Ein Ausführungsbeispiel der vorgeschlagenen Vorrichtung ist auf beiliegenden Zeichnungen dargestellt, aufgrund derer auch das Verfahren erläutert wird. Es zeigen:

Fig. 1 eine schematisch gezeichnete Vorrichtung mit vertikalem Reaktor; und

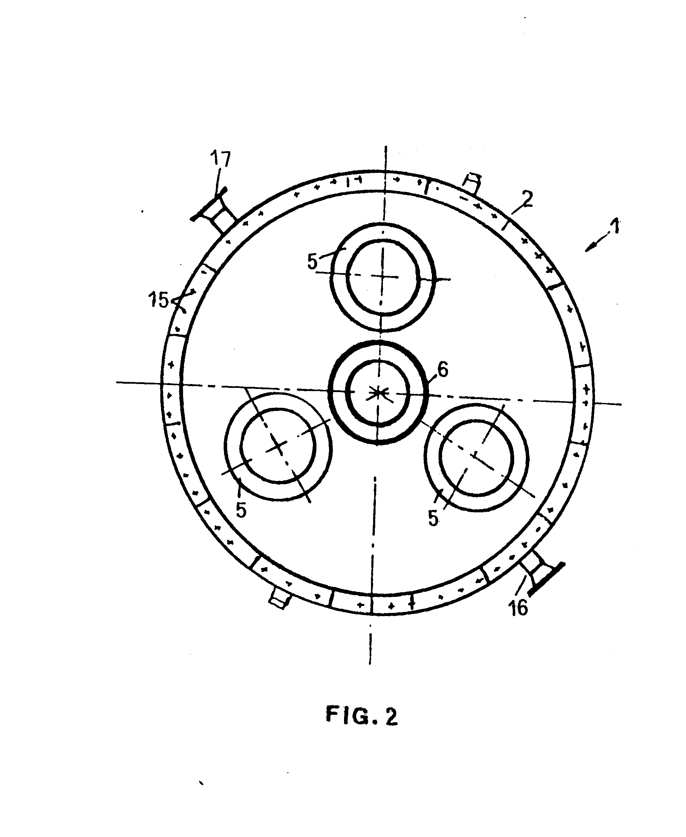

Fig. 2 einen Querschnitt durch den Reaktordeckel.

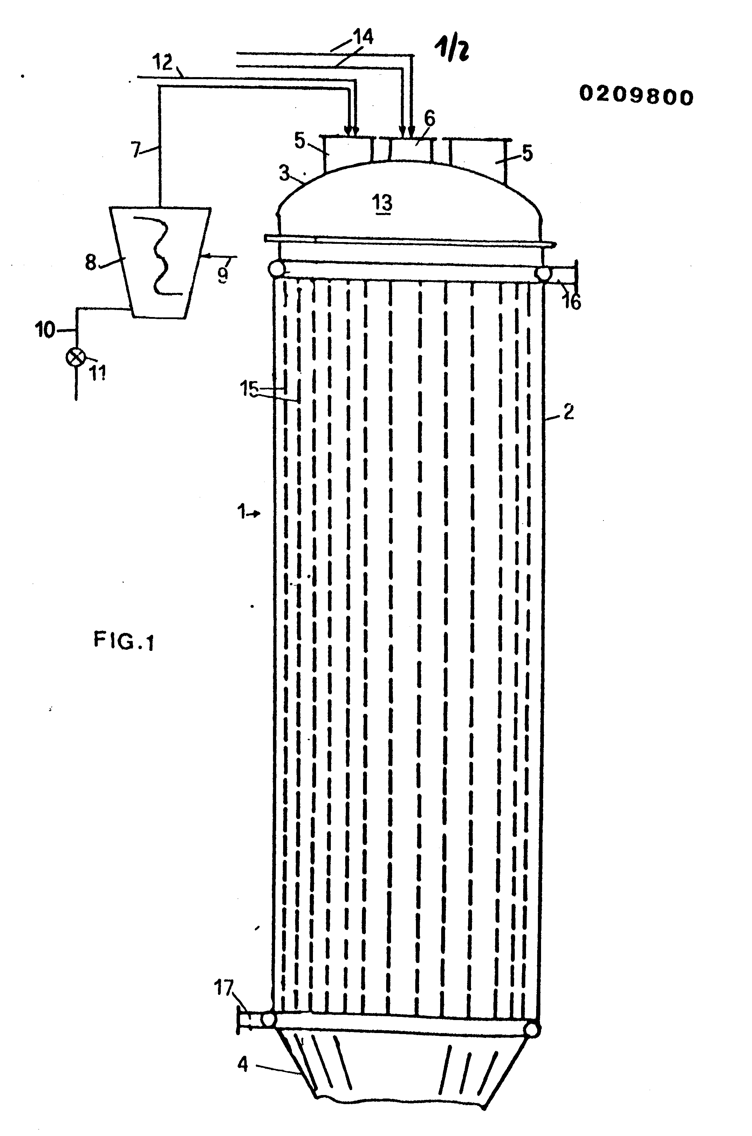

In der Fig. 1 ist mit 1 ein Reaktor bezeichnet, welcher einen zylindrischen Körper 2, einen halbkugelförmigen Deckel 3 und einen konischen Auslauf 4 besitzt. Im Reaktordeckel 3 sind drei Speiseeinheiten 5 gleichmässig verteilt angeordnet, während in der Mitte des Deckels 3 eine weitere Speiseeinheit 6 vorgesehen ist. Zu jeder Speiseeinheit 5 führt eine Leitung 7 für Kohlenwasserstoff, z.B. für Oel, welche Leitung 7 die Speiseeinheit 5 mit einem Wärmeaustauscher 8 verbindet. Der Wärmeaustauscher 8 ist durch Dampf beheizt und weist zu diesem Zwecke einen Dampfanschluss 9 auf. Die Zuführung zum Wärmeaustauscher 8 erfolgt durch eine Leitung 10 mit Förderpumpe 11.

In jede Speiseeinheit 5 mündet ferner eine Luftleitung 12, welche im Bereiche der Speiseeinheit 5 die Leitung 7 konzentrisch umfasst, so dass an der gemeinsamen Mündungsstelle der beiden Leitungen eine Injektorwirkung entsteht. In dieser Weise wird durch den durch die Leitung 7 strömenden Kohlenwasserstoff ein sauerstoffhaltiges Gas, z.B. Luft, durch die Leitung 12 mitgerissen, wobei das Gemisch in den Reaktionsraum 13 gelangt.

An die mittlere Speiseeinheit 6 wird eine Gas-Luftzuführung 14 angeschlossen, mittels welcher eine Flamme zum Vorheizen des Reaktionsraumes 13 der Reaktion vorangehend gebildet wird. Die beschriebene Speiseeinheit 6 ist also örtlich getrennt von den Speiseeinheiten 5 angeordnet und wird vorgängig der Reaktion zum Vorheizen eingesetzt, so dass während der Reaktion keine Stützflamme mehr vorhanden ist.

Zur indirekten und stufenweisen Kühlung der Reaktionsprodukte dienen Wärmeaustauscher, die im zylindrischen Körper 2 der Vorrichtung in der Strömungsrichtung gesehen, hintereinander angeordnet sind. Die Wärmeaustauscher können aus vertikal verlaufenden Kühlrohren 15 bestehen, die in der Auskleidung des zylindrischen Körpers 2 eingebettet sind und zur Aufnahme eines im Gegenstrom zur Strömungsrichtung der Reaktionsprodukte zirkulierenden Kühlmediums dienen. Die Anschlussstellen der Kühlrohre sind mit 16 und 17 bezeichnet. Die Kühlrohre bilden Kühlschlangen, wobei selbstverständlich mehrere voneinander unabhängige Kühlschlangen angeordnet werden können, die verschiedene Kühlzonen bilden.

Wesentlich ist, dass beim Betrieb der Vorrichtung die Kohlenwasserstoffe vor Beginn der Reaktion eine Temperatur aufweisen, welche etwa wenigstens 150$^{\circ}$C unter der Temperatur des sauerstoffhaltigen Gases liegt. Vorzugsweise werden die Kohlenwasserstoffe bei einem Druck von mindestens 15 bar und bei einer Temperatur von etwa 120°C mit dem sauerstoffhaltigen Gas in Berührung gebracht, welches eine Temperatur von etwa 300°C aufweist. In diesem Zustand werden dann die Reaktionskomponenten in den Brenner eingeführt. Am Ausgang des Reaktors weisen die Reaktionsprodukte eine Temperatur von 800 bis 1200°C auf und werden mit Hilfe der Wärmeaustauscher auf eine Filtriertemperatur von 150 bis 300°C abgekühlt.

Zur Erhitzung des Sauerstoffgases kann ein mit Tailgas und/oder Heizgas beheizter Wärmeaustauscher vorhanden sein.

Es wird angenommen, dass die leichter siedenden Komponenten des flüssigen Kohlenwasserstoffes bei der plötzlichen Druckreduktion an der Düse und beim gleichzeitigen Kontakt mit dem wesentlich heisseren Sauerstoffgas in einer Art flashdiffusion aus dem verdüsten Kohlenwasserstoff austreten, sich sofort entzünden und so die wärmeabgehende Reaktion liefern. Es ist dazu günstig, dass das Sauerstoffgas und der Kohlenwasserstoff möglichst sofort beim Brenner miteinander in Kontakt kommen können.

Die die schwerer siedenden Komponenten des Kohlenwasserstoffes enthaltenden Tröpfchen - eine nicht zu feine Verdüsung des Kohlenwasserstoffes ist nützlich in der praktischen Ausführung des Verfahrens - werden durch die obenbeschriebene Verdampfung der leichter siedenden Anteile vorerst kurzzeitig minimal abgekühlt. Dadurch wird vermutlich die Beständigkeit der genannten Tröpfchen etwas erhöht, was zusammen mit der zonenweisen Kühlung des Reaktors zur Erhöhung der Verweilzeit des Reaktionsgemisches beiträgt.

Anschliessend werden zwei Betriebsbeispiele des vorgeschlagenen Verfahrens erläutert, welche jedoch keine speziell
bevorzugte Ausführungsform der Erfindung darstellen.

Gefahren wurde beide Male ein Reaktor mit 7,4 m Höhe und
1,8 m Durchmesser.

<u>Beispiel 1</u>

Prozessdaten:

<u>Grade 100/25</u>

| | |
|---|---|
| Prozessluft ($Nm^3/h$) | 600 |
| KW (kg/h)   (Kohlenwasserstoff) | 200 |
| Temperatur Prozessluft $^{o}C$ | 350 |
| Temperatur KW $^{o}C$ | 120 |
| mittlere, berechnete Verweilzeit, sec. | 91 |
| Temperatur Profil: $^{o}C$ | |
| Messstellen: 1 | 1'100 |
| 2 | ----- |
| 3 | ----- |
| 4 | 400 |
| Kühlereingang $^{o}C$ | 930 |
| Kühlerausgang $^{o}C$ | 280 |
| Filtriertemperatur $^{o}C$ | 250 |

Produktedaten:
(Produkt aus Prozess mit obigen Daten)

| | |
|---|---|
| BET $m^2/g$ | 120 |
| DBP ml/100 g | 196 |
| Tint (IRB-E) | 85 |
| Flüchtige Bestandteile, % | 1.5 |
| Verlust bei 900$^o$C während 5 min. | |
| pH | 7 |
| Siebrückstand, 45 um, % | 0.05 |
| Veraschungsrückstand, % | 0.5 |
| Extrakt mit Xylol, % | 0.05 |
| Elektrischer Widerstand, cm | |
| in 50 % DBP-Mischung | 1.0 |
| Wassergehalt, % | 0.5 |
| AS-Zahl, ml/5g | 23.5 |
| Schüttgewicht, g/l nach Verdichtung | 160 |

## Beispiel 2

Prozessdaten:

| | |
|---|---|
| Prozessluft ($Nm^3/h$) | 1'850 |
| KW (kg(h) | 500 |
| Temperatur Prozessluft, $^o$C | 300 |
| " KW, $^o$C | 75 |
| mittlere Verweilzeit, sec. | 44 |
| Temperatur Profil, $^o$C: | |
| Messstellen: 1 | 1'150 |
| 2 | ----- |
| 3 | ----- |
| 4 | 680 |
| Kühlereingang, $^o$C | 950 |
| Kühlerausgang, $^o$C | 265 |
| Filtriertemperatur, $^o$C | 230 |

Produktedaten:

(Produkt aus Prozess mit obigen Daten)

| | |
|---|---|
| BET $m^2/g$ | 67 |
| DBP ml/100 g | 210 |
| Tint (IRB-5) | 84 |
| Flüchtige Bestandteile, % | |
| Verlust bei 900°C während 5 min. | 1.5 |
| pH | 7 |
| Siebrückstand, 45 um, % | 0.05 |
| Veraschungsrückstand, % | 0.5 |
| Extrakt mit Xylol, % | 0.05 |
| Elektrischer Widerstand, cm | |
| in 50 % DBP-Mischung | 0.7 |
| Wassergehalt, % | 1.5 |
| AS-Zahl, ml/5g | 24.5 |
| Schüttgewicht, g/1 nach Verdichtung | 125 |

Im weiteren folgen die Bestimmungsmethoden für die oben angegebenen mittleren Verweilzeiten und für den elektrischen Widerstand des Russes in 50 % DBP-Mischung.

<u>Mittlere Verweilzeit $E_v$ im Reaktor</u>

$$E_v = \frac{\text{Volumen}}{\text{Durchsatz}}$$

Praktische Berechnung:

<u>Volumen des Reaktors (in $m^3$)</u>

Der Reaktor ist ein 6 m hoher Kreiszylinder mit

$$V_R = \frac{1{,}82^2 \quad 3.14}{4} \times (600 + 0{,}40) = V_R \; 16.64 \; m^3$$

Durchsatz (Gemisch): 2'800 Nm$^3$/h

$$\text{Rechenwert} = \frac{\begin{array}{r} 2'800 \text{ Nm}^3/\text{h} \\ + \quad 280 \text{ " } \quad (+ 10 \text{ \%}) \\ \hline 3'080 \text{ Nm}^3/\text{h} \end{array}}{} = \underline{0,86 \text{ m}^3/\text{sec}}$$

$$E_v = \frac{16,7 \text{ m}^3 \text{ sec}}{0,86 \text{ m}^3} = \underline{19,4 \text{ sec.}}$$

Zur Bestimmung der elektrischen Resistivität (Leitfähigkeit) des Russes ist folgende Methode entwickelt worden:

2 - 4 g Russ, genau eingewogen, werden auf einer Glasplatte tropfenweise mit Dibutylphtalat versetzt und vermengt bis zur Bildung einer Paste. Das Dibutylphtalat wird mit einer Bürette dosiert, so dass das verbrauchte Volumen genau bekannt ist. Ueblicherweise wird mit einer Dibutylphtalatmenge entsprechend dem DBP-Wert + 10 % die richtige Pastenkonsistenz erhalten.

Die Russkonzentration in der Paste (Gramm/Gramm)

$g_{Russ}$ = Einwaage Russ, Gramm
$V_{DBP}$ = Volumen Dibutylphtalat, ml; Dichte = 1.06

$$K_{Russ} = \frac{g_{Russ}}{g_{Russ} + V_{DBP} \times 1.06}$$

Nun wird ein Glasrohr mit einem Innendurchmesser von 5 mm und einer Länge von 50 mm mit der Paste gefüllt und diese wird von beiden Seiten mit je einem Stahlstempel von 5 mm Duchmesser und ca. 15 cm Länge gepresst. Das Glasrohr und die 2 Stempel werden mit einem Stativ plus Klemmen senkrecht fixiert und der obere Stempel wird mit einem Gewicht von ca. 1 kg beschwert. Der elektrische Widerstand der gepressten Paste wird nun kontinuierlich gemessen:

Die Widerstandswerte nehmen mit der Zeit laufend ab und nach 2 1/2 bis 4 Stunden wird ein stabiler Wert angezeigt. Dieser Widerstandswert $R_p$ (Ohm) wird protokolliert.

Die Länge 1 (cm) des Pastenpfropfens wird gemessen.

$$R_p = S_p \times \frac{1}{s}$$

mit 1 = Länge in cm
s = Querschnitt des Glasrohres $cm^3$

Daraus kann $S_p$ ($\Omega \cdot cm$) berechnet werden.

Die Reproduzierbarkeit der Methode liegt innerhalb +/- 10 %.

Der Vorteil der Methode liegt darin, dass kein hoher Druck notwendig ist und dass der ausgeübte Druck wenig Einfluss auf das Resultat hat.

P a t e n t a n s p r ü c h e

1. Verfahren zur Herstellung von aschearmem und elektrisch leitendem Russ durch Teilverbrennung und Pyrolyse von flüssigem Brennstoff mit einem sauerstoffhaltigen Gas in einem Reaktor, dadurch gekennzeichnet, dass der flüssige Kohlenwasserstoff vorgewärmt und unter Druck und das sauerstoffhaltige Gas mit einer höheren Temperatur als der Kohlenwasserstoff gemeinsam in den Reaktor geleitet werden, während die Zuleitung einer der Reaktion vorangehenden Gas-Luftzuführung in den Reaktor, örtlich getrennt von der Eintrittsstelle der Reaktionskomponenten erfolgt und dass die Teilverbrennung und Pyrolyse bei einer Verweilzeit stattfindet, welche mindestens etwa 10 Sekunden beträgt, worauf die Reaktionsprodukte ausserhalb des Reaktors indirekt und stufenweise gekühlt werden.

2. Verfahren nach Anspruch 1, dadurch gekennzeichnet, dass zwischen der Temperatur des Kohlenwasserstoffes und des sauerstoffhaltigen Gases eine Differenz von wenigstens $150^{\circ}$C herrscht.

3. Verfahren nach den Ansprüchen 1 und 2, dadurch gekennzeichnet, dass zur Einführung in den Reaktor die Kohlenwasserstoffe auf etwa $120^{\circ}$C bei mindestens 15 bar Druck und das Sauerstoffgas auf etwa $300^{\circ}$C erwärmt werden.

4. Verfahren nach den Ansprüchen 1 bis 3, dadurch gekennzeichnet, dass die am Ausgang des Reaktors etwa 800 bis $1200^{\circ}$C warmen Reaktionsprodukte in mindestens zwei Stufen durch Wärmeaustausch auf eine Filtrierungstempe-

XA 6400 EP
02.07.1986/RR/he

ratur von 150 bis 300°C abgekühlt werden.

5. Vorrichtung zur Herstellung von aschearmen und elektrisch
leitendem Russ durch Teilverbrennung und Pyrolyse von
flüssigem Brennstoff mit einem sauerstoffhaltigen Gas
als Reaktionskomponenten, dadurch gekennzeichnet, dass
dieselbe einen Reaktor mit einem Längen-Durchmesserverhältnis von mindestens 2 besitzt, welchem Reaktor
Mittel zur Erwärmung der Kohlenwasserstoffe unter Druck
und zur Erhitzung des sauerstoffhaltigen Gases vorgeschaltet und mindestens ein Wärmeaustauscher mit stufenweiser indirekter Kühlung der Reaktionsprodukte nachgeschaltet ist.

6. Vorrichtung nach Anspruch 5, dadurch gekennzeichnet,
dass der Verbrennungsreaktor mit zonenweise verteilten
Kühlrohren versehen ist, die in der Auskleidung angeordnet und zur Aufnahme eines im Gegenstrom zirkulierenden Kühlmediums eingerichtet sind.

7. Vorrichtung nach Anspruch 5, dadurch gekennzeichnet,
dass dem Reaktor ein gasbeheizter Wärmeaustauscher zur
Erhitzung des sauerstoffhaltigen Gases vorgeschaltet
ist.

8. Aschearmer und elektrisch leitender Russ, hergestellt
nach dem Verfahren nach Anspruch 1.

FIG.1

0209800

0209800

FIG. 2